# EUROPEAN PATENT SPECIFICATION

(11) **EP 3 509 415 B1**
(45) Date of publication and mention of the grant of the patent: **28.10.2020**
(21) Application number: 17771837.6
(22) Date of filing: 07.09.2017
(51) Int. Cl.: A01G 3/08

(54) **IMPROVED BRANCH CUTTER**
VERBESSERTER ASTSCHNEIDER
COUPE DE BRANCHE AMÉLIORÉ

(30) Priority: 08.09.2016 GB 201615290
(43) Date of publication of application: 17.07.2019
(73) Proprietor: Grey Technology Limited, Warndon, Worcester WR4 9FB (GB)
(72) Inventor: GREY, Nicholas Gerald, Warndon, Worcester WR4 9FB (GB); VAGGES, Christopher, Warndon, Worcester WR4 9FB (GB)
(74) Representative: Gee, Steven William
(86) International application number: PCT/GB2017/052604
(87) International publication number: WO 2018/046918

(56) References cited:
- EP-A1- 0 117 848
- CN-A- 102 334 421
- DE-A1- 19 505 653
- JP-U- S6 210 746
- US-A- 1 728 272
- US-A- 3 373 489
- US-A- 3 590 892

## Description

### FIELD OF THE INVENTION

The invention relates to a branch cutter, namely a powered tool having a circular saw blade used for cutting tree branches and the like.

For brevity, reference is made below to the user of the branch cutter being male but that is not necessarily the case in practice.

### BACKGROUND TO THE INVENTION

It is known to cut tree branches manually with a conventional saw. It is also known to cut branches with a chain saw, the chain carrying cutting teeth and being driven by an internal combustion engine or by an electric motor.

Another type of branch cutter, and the type to which the present invention is directed, has a substantially rigid circular saw blade with saw teeth around its periphery, the saw blade being driven to rotate, typically by an electric motor. A known branch cutter of this type is supplied by the present Applicant under the model designation HT04, the blade of that particular branch cutter being driven by an electric motor which is powered by a battery mounted on the handle of the tool.

Branch cutters of this type partially enclose at least one side of the saw blade in a housing, the housing extending around a part of the periphery of the saw so that the saw blade is fully exposed only at a housing opening. The provision of a housing around a large proportion of the periphery of the blade significantly reduces the likelihood of inadvertent contact with the saw blade, particularly with the saw teeth.

The size of the housing opening, namely its radial and circumferential extent, is largely determined by the radius of the blade. The blade is mounted upon a bearing at its centre and the maximum thickness of a branch which can theoretically be cut is therefore slightly less than the radius of the blade. However, the housing of the known branch cutters extends beyond the bearing so as to provide protection for the bearing. The exposed radial extent of the saw blade is therefore less than the blade radius, which thereby reduces the thickness of a branch which can be cut. In particular, whilst the blade might have a radius of 50 mm the housing opening may expose only the outer part of the blade (having a radial extent of around 25 mm for example). Such a branch cutter therefore has a maximum cutting depth of 25 mm.

It is desirable for the housing to cover the blade bearing so that the bearing can be protected from damage which might otherwise be caused by contacting a branch being cut, or contacting neighbouring branches during a cutting operation. Also, by covering the bearing the likelihood of sawdust, sap and the like fouling the bearing is reduced. Furthermore, the saw blade is typically removable for cleaning and replacement and is secured to the bearing by a fastening; it is desirable that a branch being cut does not engage the fastening so as to reduce the likelihood that the blade might inadvertently become loosened or released whilst it is rotating.

The torque of the motor driving the saw blade can be determined according to the maximum thickness of a branch which can be cut. For example, if the housing opening is sized to permit a maximum branch thickness of around 25 mm to be cut, the motor torque can be chosen accordingly and the requirement to provide sufficient torque to cut through thicker branches can be avoided. Reducing the maximum torque required by the motor is particularly beneficial for battery-powered branch cutters.

The known branch cutter HT04 uses a peripheral pinion gear to drive the saw blade. The saw blade is therefore mounted to a bearing at its centre but is driven to rotate at its periphery. This has significant benefits in terms of packaging as it is not necessary to communicate the drive from the periphery to the centre of a (rotatable) saw blade. The housing can therefore have a reduced thickness, particularly adjacent to the centre of the saw blade, which reduces the likelihood that the housing will foul another branch (or another part of the branch being cut) during use. The peripheral pinion gear of the HT04 branch cutter also facilitates the removal and refitting of the saw blade.

It will be understood that a branch cutter having a housing opening with a radial extent of 25 mm can be used to cut through branches which are thicker than 25 mm. In particular, it will be possible with such a branch cutter to cut through 25 mm of a 30 mm branch and break the remaining 5 mm (for example). Also, it is possible to cut through 25 mm of a 50 mm branch from one side of the branch and then to cut through the remaining 25 mm from the other side of the branch. The ability to re-orient the branch cutter so as to be able to cut a branch from both sides is not always possible, however, and the maximum thickness of branch which can be cut may in practice be determined directly by the size of the housing opening.

The circumferential extent of the housing opening will typically exceed the radial extent, notwithstanding that it is desirable to restrict the circumferential extent of the housing opening is so as to minimise the risk of inadvertent contact with the teeth of a rotating saw blade.

EP 0 177 848 discloses a branch cutter with an elongate handle and a cutter head, the cutter head mounting a circular saw blade which is largely enclosed by a housing, the housing having two openings at which the saw blade is exposed for cutting. JP S62 10746 U discloses a similar branch cutter in which a first opening is aligned with the longitudinal axis of the elongate handle and a second opening is adjacent to the elongate handle. CN 102 334 421 discloses a branch cutter with an elongate handle and a cutter head, the cutter head mounting a circular saw blade which is movable relative to its housing, the saw blade being exposed at a first (cutting) opening and at a second (non-cutting) opening. US 3 373 489 A, US 1 728 272 A, US 3 590 892 A, DE 195 05 653 A1 illustrate other branch cutters.

### SUMMARY OF THE INVENTION

The present invention, which is achieved according the appended claims, relates to an improved branch cutter, and in particular to a branch cutter which can more readily be used safely to cut branches of greater thickness without requiring a larger blade or a more powerful motor.

According to the present invention there is provided a branch cutter having a cutter head upon which a circular saw blade is mounted, the saw blade having saw teeth around its periphery, a motor housed by the cutter head, the periphery of the saw blade being at least partially covered by a housing, the housing having a first opening to expose a first portion of the periphery of the saw blade, the housing having a second opening to expose a second portion of the periphery of the saw blade, the branch cutter having an operating handle, the second opening being closer to the operating handle than the first opening, the cutter head having a longitudinal axis, characterised in that the centre of the saw blade is offset from the longitudinal axis, and in that a pinion engages the saw teeth to drive the saw blade to rotate in use.

The first portion of the periphery of the saw blade and the second portion of the periphery of the saw blade are spaced apart around the circumference of the saw blade. This permits the branch cutter to be used to cut a branch in a first direction by way of the saw teeth exposed at the first opening, and in a second direction by way of the saw teeth exposed at the second opening, without substantially re-orienting the branch cutter. The branch cutter can therefore be used, for example, to cut the top half of a branch in a downwards direction and the bottom half of the same branch in an upwards direction, without substantially re-orienting the branch cutter. If each of the first and second openings exposes a radial extent of 25 mm of the blade, the maximum branch thickness which can readily be cut is 50 mm.

The references to the branch cutter not being re-oriented are significant in practice, often in terms of safety of use of the branch cutter. As above explained, it is possible to cut thicker branches with the known branch cutters, but only by re-orienting the branch cutter, namely directing the branch cutter towards the branch from one side and then from another side (or from the top and then the bottom, for example). If the branch cutter is being used to cut a branch some distance from the ground the user may have to climb down a ladder, reposition the ladder and then re-climb the ladder in order to gain safe access to opposing sides of the branch. If it is not possible to re-position the ladder, or the user is not sufficiently diligent to do this, the first side of the branch may be cut with the housing opening (and the exposed rotating saw teeth) facing away from the user and the user pushing the blade away from himself as the branch is cut. The second side of the branch may then be cut with the housing opening (and the exposed rotating saw teeth) facing towards the user and being pulled towards the user as the branch is cut. The latter part of this operation clearly carries significant danger to the user.

Alternatively, the user may choose to cut through around half of a thick branch from above, moving the blade downwardly as that half of the branch is cut. The second half of the branch can then be cut from below, moving the blade upwardly as the branch is cut. Whilst such a cutting operation is possible with the known branch cutters, it either requires the user to re-position himself, or to re-position his hands upon the handle of the branch cutter. In practice, the user may have to reverse his right and left hands upon the handle of the branch cutter, and this might significantly reduce the safety and comfort of the user.

For the above reasons, in practice the known branch cutters are typically used to cut branches in a single orientation, and without the user having to re-orient himself or the branch cutter. The maximum thickness of branch which can be cut is therefore limited to approximately the radial extent of the housing opening (which might be 25 mm for example).

With the present invention on the other hand, the user can move the first portion of the saw blade into engagement with a branch, with the branch cutter being moved in a chosen and safe direction relative to the user. The user can maintain that chosen and safe direction of movement as a first part of the branch is cut. The user can thereafter move the second portion of the blade into engagement with a different part of the branch, again in a chosen and safe direction relative to the user (albeit a somewhat different direction). The user typically does not himself have to move between these cutting operations, and typically does not need to change his grip upon the branch cutter between these cutting operations. Enabling the branch to be cut from two different directions (or alternatively stated enabling different parts of the same branch to be cut sequentially) allows thicker branches to be cut, easily and safely, than is possible with the known branch cutters.

Preferably, a part of the first portion and a part of the second portion are diametrically opposed across the saw blade. This permits opposing sides of a branch to be cut in turn, thereby maximising the thickness of branch which can be cut.

It will be understood that diametrically opposing first and second openings are preferred as that will more easily permit the user to cut through a thick branch from two opposing directions. Precise diametric opposition is not, however, required, and having only a part of the first opening diametrically opposed to only a part of the second opening is sufficient.

The cutter head contains the motor and the drive means for the blade and includes the housing for the blade. The known branch cutter HT04 has the centre of the saw blade, and the saw blade opening, aligned with the longitudinal axis of the cutter head. Such positioning of the opening is preferable as this allows the user to push the branch cutter towards the branch to be cut, with the force being directed along the longitudinal axis of the handle and cutter head to the cutting location. Providing a second opening with such an arrangement would either require the two openings to be very close together, or to require the existing opening to be moved to a less suitable position. Offsetting the centre of the saw blade from the longitudinal axis of the cutter head, however, allows the first opening to be aligned with the longitudinal axis of the cutter head as desired, with the second opening spaced a significant distance therefrom (and perhaps diametrically opposed thereto).

Desirably, the circumferential extent of the first opening and the circumferential extent of the second opening are identical or substantially identical. Desirably also, the radial extent of the first opening and the radial extent of the second opening are identical or substantially identical. Preferably, the shape and size of the first and second openings are identical or substantially identical. Providing a first opening and a second opening which are identical in size and shape enables effectively the same cutting operations to be undertaken by way of both openings.

Alternatively, the first opening is larger in circumferential and/or radial extent than the second opening. Such an arrangement allows the first opening to be the primary opening which is used most of the time, with the second opening only being used occasionally, for example when required for cutting thicker branches.

It will be understood that the user will typically be able to impart greater force upon the saw blade when exposed through an opening closer to the handle; locating the second opening closer to the handle than the first opening will likely encourage the user to utilise the second opening most of the time, particularly when cutting higher branches. It will be understood that when using a branch cutter such as HT04 the position of the saw blade opening requires the user to cut a branch by pushing the cutter head away from himself. This is typically the safest option, but is disadvantageous when cutting a branch from below as the weight of the branch will seek to close the cut and clamp the saw blade. Locating the second opening closer to the handle allows a branch to be cut by pulling the cutter head towards the user, which in particular allows the cutting of a high branch from above so that the weight of the branch acts to open up the cut (and not to clamp the blade).

The first and second housing openings have leading and trailing edges according to the direction of rotation of the saw blade. It will be understood that the rotation of the saw blade in use will drive the branch being cut away from the leading edge and towards the trailing edge (and/or may move the branch cutter relative to the branch). Desirably the trailing edge has a larger radial extent than the leading edge. The leading edge is primarily provided to cover the saw blade and so does not require a large radial extent beyond the blade. The trailing edge should have a greater radial extent, however, i.e. it should extend farther beyond the saw blade so as to trap a branch against the trailing edge as the saw blade rotates (thereby minimising the likelihood that the branch is pushed away from the saw blade by engagement with the trailing edge). Desirably, the trailing edge can carry teeth or other formations, and/or can be shaped, to hold the branch in engagement with the rotating saw blade, or to urge the branch towards the rotating saw blade.

Because the saw blade is driven to rotate by a gear wheel or pinion engaging its periphery there is no requirement to communicate drive to the centre of the saw blade and the central mounting of the saw blade can be separated from the peripheral drive.

Preferably the pinion is driven by a flexible belt. Whilst flexible drive belts are designed to be substantially inextensible, the belt provides some shock absorption between the saw blade and the motor, and thereby reduces the likelihood of damage to the saw teeth by the pinion during use.

Desirably, the housing covers only parts of one side of the saw blade, so that the other side of the saw blade is fully or largely exposed. It is therefore appreciated that the safety of the user is enhanced by the housing covering the periphery of the saw blade and the saw teeth; there is little or no additional safety provided by covering the flat side of the blade. Also, fully or largely exposing one side of the saw blade better allows sawdust and other debris to move away from the saw blade rather than becoming trapped by a part of the branch cutter.

Preferably, the branch cutter has a bearing for the saw blade and a fastener for securing the saw blade to the bearing. Preferably also, the fastener is inserted from the exposed side of the saw blade towards the covered side of the saw blade. Such an arrangement facilitates access to the fastener, for example when it is desired to remove the saw blade for cleaning, sharpening and/or replacement.

Such an arrangement also allows the bearing to be obscured and protected by the housing.

Branch cutters are known to require frequent cleaning due to the combination of sap, moisture and sawdust which will often accumulate upon and within the branch cutter. The provision of a peripheral drive is particularly beneficial in this respect as the saw blade can be secured to the bearing by way of a simple removable fastening, permitting regular and repeated removal for cleaning of the saw blade and housing.

### BRIEF DESCRIPTION OF THE PREFERRED EMBODIMENTS

The invention will now be described in more detail, by way of example, with reference to the accompanying drawings, in which:
- Fig.1: is a perspective view of a branch cutter according to the present invention;
- Fig.2: is a side view of a part of the branch cutter;
- Fig.3: is an underside view of the part of the branch cutter of Fig.2, with a part of the cover removed; and
- Fig.4: is a top plan view of the part of the branch cutter of Fig.3.

### DETAILED DESCRIPTION

The branch cutter 10 comprises a handle 12 having a (removable and rechargeable) battery 14 and an actuating switch 16. The battery and switch are connected to a motor (not seen) within the cutter head 18. The motor drives a circular saw blade 20 to rotate, as explained below.

In this embodiment the cutter head 18 is removable from the handle 12, by way of a releasable connection 22. The same handle 12 can therefore be used with other tools, including a hedge trimmer for example. In other embodiments a releasable connection is not required and the cutter head 18 is permanently secured to the handle 12.

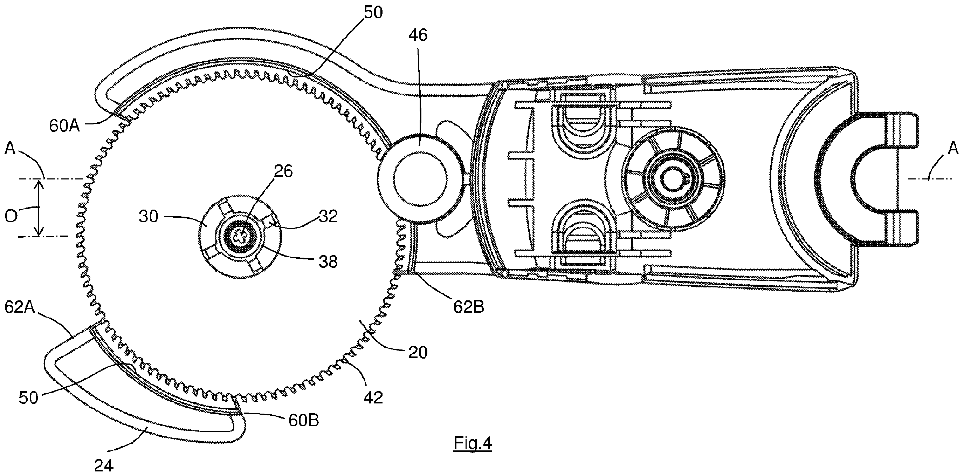

The saw blade 20 is mounted to a bearing (not seen) at its centre by way of a releasable fastener 26. As better seen in Fig.4 the fastener 26 is a cross-headed bolt which clamps a boss 30 against the surface of the saw blade 20, the saw blade having a small hole (not seen) at its centre through which the fastener 26 can pass. In this embodiment the hole is circular and is only slightly larger than the diameter of the shaft of the fastener 26 so that the insertion of the fastener serves to position the blade 20 centrally relative to its bearing (not seen); in other embodiments the hole is larger and accommodates a locating projection on the underside of the boss 30.

The boss 30 has four buttresses 32 which can be gripped by the user when the fastener 26 is being tightened and/or loosened, so as to hold the saw blade 20 against rotation during removal and fitment.

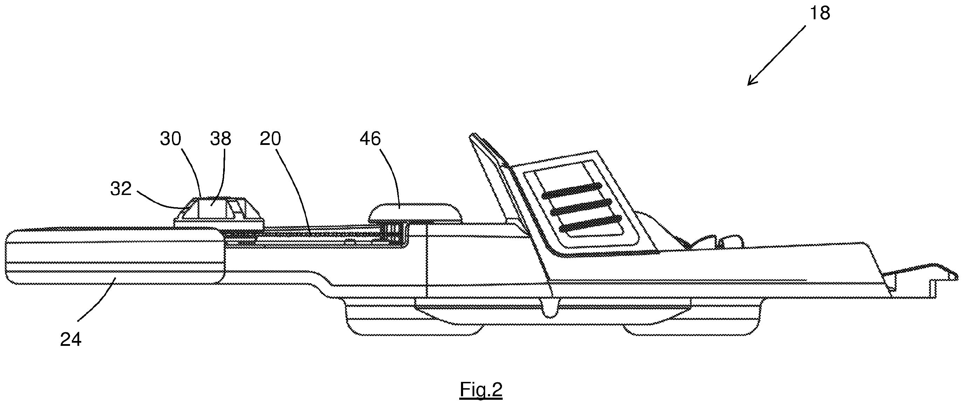

As seen in Fig.2, the head of the fastener lies inside the sleeve 38 of the boss 30. The boss 30 therefore also protects the fastener 26 during use by reducing the likelihood that a branch being cut, or a neighbouring branch, or flying sawdust, will engage the fastener 26. The likelihood of the fastener 26 becoming unintentionally loosened is thereby much reduced. As with the known branch cutters and similar tools, the saw blade 20 rotates in a direction (counterclockwise as viewed in Fig.4) which acts to tighten the fastener 26.

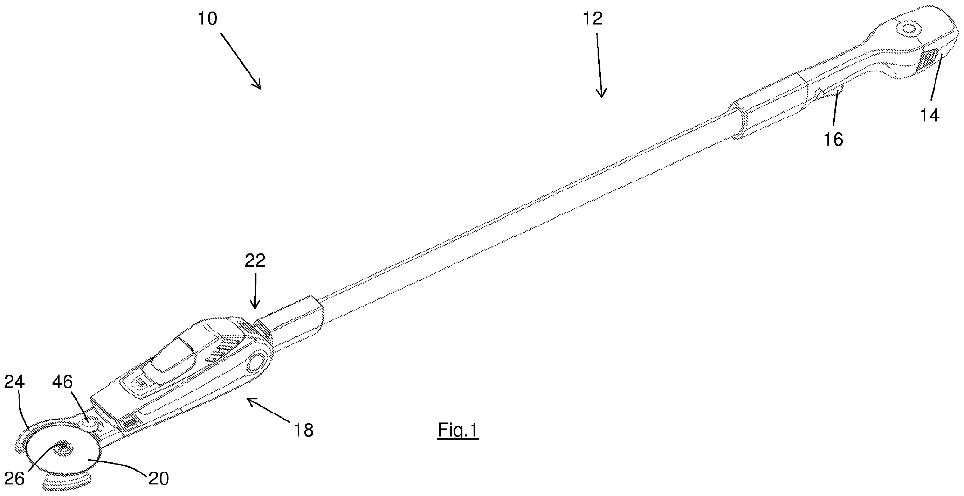

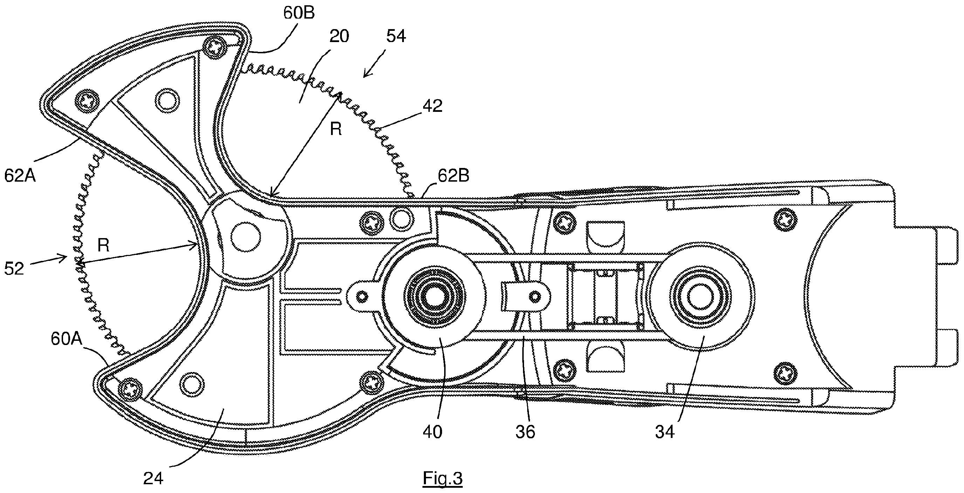

As shown in relation to Fig.3, the motor is connected to a drive pulley 34 which drives a flexible belt 36, the flexible belt in turn rotating a driven pulley 40 which is connected to a pinion (not seen) which engages the saw teeth 42 at the periphery of the saw blade 20. The pinion is located underneath a (non-rotating) cover 46 which is visible in Figs. 1,2 and 4. It will be understood that the pinion has teeth which cooperate with the saw teeth 42, the pinion teeth ideally being shaped to maximise the area of engagement with the saw teeth 42 so as to minimise the point loading and thereby the wear upon the saw teeth.

Whilst the flexible belt 36 is designed to be substantially inflexible, in practice it will have some resilience and will therefore be able to absorb some of the stresses between the pinion and the saw teeth 42 and thereby reduce the maximum forces therebetween, so as to reduce the likelihood of damage to the pinion and/or saw teeth 42 in use.

The cutter head 18 has a housing 24 for the saw blade 20. It will be seen from Figs. 3 and 4 that the housing 24 covers a part of only one side of the saw blade 20, so that the boss 30 and fastener 26 are permanently exposed and permanently accessible. Exposing one side of the saw blade 20 allows sawdust and the like to move away from the blade and thereby reduces the number of places at which sawdust, sap and other debris can become trapped (and compressed) within the cutter head 18.

The housing 24 extends beyond certain parts of the saw blade 20 and the extended parts are stepped around the periphery of the saw blade 20 so as to provide surfaces 50 which overlie and partially surround the saw teeth 42. The housing 24 thereby prevents inadvertent contact with the saw teeth. Accordingly, as seen in Fig.2 in particular, the housing 24 covers a large proportion of the saw teeth 42.

The saw teeth 42 are, however, exposed at a first housing opening 52 and at a second housing opening 54. Thus, unlike the known branch cutters the saw blade 20 of the present branch cutter is exposed at two separate housing openings, providing two separate cutting regions. The first and second housing openings 52, 54 in this embodiment have the same radial extent R and the same peripheral extent (i.e. the circumferential distance between the leading edge 60A and trailing edge 62A of the first opening 52 is the same as the circumferential distance between the leading edge 60B and trailing edge 62B of the second opening 54), but this is not necessarily the case.

In practice, it is expected that for most of the time the branch cutter 10 will be used to cut branches which are smaller than the radial extent R, and the user will typically cut those branches by way of the saw teeth 42 exposed at the first housing opening 52, with the user pushing the cutter head 18 away from himself in common with the prior art branch cutter HT04. When it is desired to cut branches which are thicker than the radial extent R, or when it is desired to cut high branches from below, the user will typically use the saw teeth exposed at the second housing opening 54.

Typically, when using the saw teeth exposed at the second housing opening 54, the user will hold the branch cutter 10 with the second opening 54 facing downwardly and towards the user; the branch can then be cut by moving the cutter head 18 downwardly and slightly towards the user. If the branch is thicker than the radial extent R the user can (previously or subsequently) reposition the cutter head to cut through another part of the branch by way of the saw teeth exposed at the first opening 52, the cutter head being moved away from the user (and perhaps also slightly upwardly) as the branch is cut. It will be understood that the user does not have to reposition himself, or to reposition the branch cutter in his hands, in order to undertake both of these cutting operations.

It will be seen that the second opening 54 is not diametrically opposed to the first opening 52, though in other embodiments the openings could be diametrically opposed if desired. However, a part of the second opening 54 is diametrically opposed to a part of the first opening 52, so that the two openings can be used to cut a branch in two substantially opposing directions. It will be understood that a part of the first and second openings being diametrically opposed means that the ends of a chosen diameter of the saw blade lie in the respective first and second openings.

The diametrical opposition of parts of the openings 52,54 is achieved by offsetting the centre of the blade from the longitudinal axis A-A (Fig.4), in this embodiment by an offset O. The offsetting enables the desired separation of the first and second openings whilst still having the first opening spanning the longitudinal axis A-A. This positioning of the first opening is highly desirable as it allows the user to push the blade 20 against a branch to be cut with the line of force acting directly along the longitudinal axis A-A (and consequently along the longitudinal axis of the handle 12 in this embodiment).

The direction of blade rotation in the orientation of Fig.4 is anti-clockwise. During use the branch is driven away from the leading edge 60A (or 60B as applicable) and towards the trailing edge 62A (or 62B as applicable). The trailing edges 62A,B have a greater radial extent than the leading edges 60A,B so as to reduce the likelihood that a branch is forced over the trailing edge and away from the saw teeth 42. In other embodiments the trailing edges 62A,B can carry fixed teeth or be roughened so as to reduce the likelihood that a branch will move away from the saw teeth 42 during cutting.

## Claims

1. A branch cutter (10) having a cutter head upon which a circular saw blade (20) is mounted, the saw blade having saw teeth (42) around its periphery, a motor housed by the cutter head, the periphery of the saw blade being at least partially covered by a housing (24), the housing having a first opening (52) to expose a first portion of the periphery of the saw blade, the housing having a second opening (54) to expose a second portion of the periphery of the saw blade, the branch cutter having an operating handle (12), the second opening (54) being closer to the operating handle (12) than the first opening (52), the cutter head having a longitudinal axis (A-A),
**characterised in that** the centre of the saw blade (20) is offset (O) from the longitudinal axis (A-A), and **in that** a pinion engages the saw teeth (42) to drive the saw blade to rotate in use.

2. The branch cutter according to claim 1 in which the first opening (52) and the second opening (54) are located so that a part of the first portion of the saw blade and a part of the second portion of the saw blade are diametrically opposed.

3. The branch cutter according to claim 1 or claim 2 in which the circumferential extent of the first opening (52) and the circumferential extent of the second opening (54) are substantially identical.

4. The branch cutter according to any one of claims 1-3 in which the radial extent (R) of the first opening and the radial extent of the second opening are substantially identical.

5. The branch cutter according to any one of claims 1-4 in which the shape and size of the first and second openings (52, 54) are substantially identical.

6. The branch cutter according to any one of claims 1-5 in which the operating handle (12) has a longitudinal axis, and in which the first opening (52) spans the longitudinal axis of the handle.

7. The branch cutter according to any one of claims 1-6 in which the first opening (52) has a leading edge (60A) and trailing edge (62A), and in which the trailing edge of the first opening projects beyond the saw blade (20) further than the leading edge of the first opening.

8. The branch cutter according to any one of claims 1-7 in which the second opening (54) has a leading edge (60B) and trailing edge (62B), and in which the trailing edge of the second opening projects beyond the saw blade (20) further than the leading edge of the second opening.

9. The branch cutter according to claim 7 or claim 8 in which the trailing edge (62A) of the first opening (52) and/or the trailing edge (62B) of the second opening (54) carries teeth or other formations adapted to hold a branch in engagement with the rotating saw blade in use.

10. The branch cutter according to any one of claims 1-9 in which the pinion is connected to the motor by way of a flexible drive belt (36).

11. The branch cutter according to any one of claims 1-10 in which the housing (24) covers parts of one side of the saw blade (20), the other side of the saw blade being largely exposed.

12. The branch cutter according to claim 10 having a bearing for the saw blade (20), the saw blade being removable and replaceable, the branch cutter having a removable fastener (26) for securing the saw blade (20) to the bearing, the fastener being fitted from the largely exposed side of the saw blade.

13. The branch cutter according to claim 11 in which the fastener (26) is located in a boss (30) which surrounds the fitted fastener.

14. The branch cutter according to claim 13 in which the boss has at least one buttress (32).

## Patentansprüche

1. Ein Astschneider (10) mit einem Schneidkopf, auf dem ein Kreissägeblatt (20) montiert ist, wobei das Sägeblatt an seinem Umfang Sägezähne (42) aufweist, ein Motor, der von dem Schneidkopf aufgenommen wird, wobei der Umfang des Sägeblatts zumindest teilweise von einem Gehäuse (24) abgedeckt ist, wobei das Gehäuse eine erste Öffnung (52) aufweist, um einen ersten Abschnitt des Umfangs des Sägeblatts freizulegen, wobei das Gehäuse eine zweite Öffnung (54) aufweist, um einen zweiten Abschnitt des Umfangs des Sägeblatts freizulegen, wobei der Astschneider einen Bedienungsgriff (12) aufweist, wobei die zweite Öffnung (54) näher am Bedienungsgriff (12) liegt als die erste Öffnung (52), wobei der Schneidkopf eine Längsachse (A-A) aufweist, **dadurch gekennzeichnet, dass** die Mitte des Sägeblatts (20) gegenüber der Längsachse (A-A) versetzt (O) ist, und dass ein Ritzel in die Sägezähne (42) eingreift, um das Sägeblatt im Gebrauch zur Drehung anzutreiben.

2. Astschneider nach Anspruch 1, bei dem die erste Öffnung (52) und die zweite Öffnung (54) so angeordnet sind, dass ein Teil des ersten Abschnitts des Sägeblatts und ein Teil des zweiten Abschnitts des Sägeblatts einander diametral gegenüberliegen.

3. Astschneider nach Anspruch 1 oder Anspruch 2, bei dem die Umfangsausdehnung der ersten Öffnung (52) und die Umfangsausdehnung der zweiten Öffnung (54) im Wesentlichen identisch sind.

4. Astschneider nach einem der Ansprüche 1-3, bei dem die radiale Ausdehnung (R) der ersten Öffnung und die radiale Ausdehnung der zweiten Öffnung im wesentlichen identisch sind.

5. Astabschneider nach einem der Ansprüche 1-4, bei dem die Form und Größe der ersten und zweiten Öffnungen (52, 54) sind im Wesentlichen identisch.

6. Astschneider nach einem der Ansprüche 1-5, bei dem der Bedienungsgriff (12) eine Längsachse hat und bei dem die erste Öffnung (52) die Längsachse des Griffs überspannt.

7. Astschneider nach einem der Ansprüche 1-6, bei dem die erste Öffnung (52) eine Vorderkante (60A) und eine Hinterkante (62A) hat, und bei dem die Hinterkante der ersten Öffnung weiter über das Sägeblatt (20) hinausragt als die Vorderkante der ersten Öffnung.

8. Astschneider nach einem der Ansprüche 1-7, bei dem die zweite Öffnung (54) eine Vorderkante (60B) und eine Hinterkante (62B) hat, und bei dem die Hinterkante der zweiten Öffnung weiter über das Sägeblatt (20) hinausragt als die Vorderkante der zweiten Öffnung.

9. Astschneider nach Anspruch 7 oder 8, bei dem die Hinterkante (62A) der ersten Öffnung (52) und/oder die Hinterkante (62B) der zweiten Öffnung (54) Zähne oder andere Formationen trägt, die geeignet sind, einen Ast in Eingriff mit dem rotierenden Sägeblatt im Gebrauch zu halten.

10. Astschneider nach einem der Ansprüche 1-9, bei dem das Ritzel über einen flexiblen Antriebsriemen (36) mit dem Motor verbunden ist.

11. Astschneider nach einem der Ansprüche 1-10, in dem das Gehäuse (24) deckt Teile einer Seite des Sägeblattes (20) ab, während die andere Seite des Sägeblattes weitgehend freiliegt.

12. Astschneider nach Anspruch 10 hat ein Lager für das Sägeblatt (20), wobei das Sägeblatt abnehmbar und austauschbar ist, der Astschneider hat eine abnehmbare Befestigungsvorrichtung (26) zum Befestigen des Sägeblatts (20) an dem Lager, wobei die Befestigungsvorrichtung von der weitgehend freiliegenden Seite des Sägeblatts aus angebracht wird.

13. Astschneider nach Anspruch 11, in dem sich die Befestigungsvorrichtung (26) befindet in einer Nabe (30), die die montierte Befestigungsvorrichtung umgibt.

14. Astschneider nach Anspruch 13, bei dem die Nabe mindestens einen Stützpfeiler hat (32).

## Revendications

1. Un coupe-branches (10) ayant une tête de coupe sur laquelle est montée une lame de scie circulaire (20), la lame de scie ayant des dents de scie (42) sur sa périphérie, un moteur logé par la tête de coupe, la périphérie de la lame de scie étant au moins partiellement recouverte par un boîtier (24), le boîtier ayant une première ouverture (52) pour exposer une première partie de la périphérie de la lame de scie, le boîtier ayant une deuxième ouverture (54) pour exposer une deuxième partie de la périphérie de la lame de scie, le coupe-branches ayant une poignée de commande (12), la deuxième ouverture (54) étant plus proche de la poignée de commande (12) que la première ouverture (52), la tête de coupe ayant un axe longitudinal (A-A), **caractérisé en ce que** le centre de la lame de scie (20) est décalé (O) par rapport à l'axe longitudinal (A-A), et **en ce qu'**un pignon s'engage dans les dents de scie (42) pour entraîner la lame de scie en rotation en cours d'utilisation.

2. Coupe-branches selon la revendication 1, dans lequel la première ouverture (52) et la deuxième ouverture (54) sont situées de telle sorte qu'une partie de la première partie de la lame de scie et une partie de la deuxième partie de la lame de scie sont diamétralement opposées.

3. Coupe-branches selon la revendication 1 ou la revendication 2, dans lequel l'étendue circonférentielle de la première ouverture (52) et l'étendue circonférentielle de la deuxième ouverture (54) sont sensiblement identiques.

4. Coupe-branches selon l'une des revendications 1 à 3, dans lequel l'étendue radiale (R) de la première ouverture et l'étendue radiale de la deuxième ouverture sont sensiblement identiques.

5. Coupe-branches selon l'une des revendications 1 à 4, dans lequel la forme et la taille de la première et de la deuxième ouverture (52, 54) sont sensiblement identiques.

6. Coupe-branches selon l'une des revendications 1 à 5, dans lequel la poignée de commande (12) a un axe longitudinal et dans lequel la première ouverture (52) s'étend sur l'axe longitudinal de la poignée.

7. Coupe-branches selon l'une des revendications 1 à 6, dans lequel la première ouverture (52) a un bord d'attaque (60A) et un bord de fuite (62A), et dans lequel le bord de fuite de la première ouverture dépasse la lame de scie (20) plus loin que le bord d'attaque de la première ouverture.

8. Coupe-branches selon l'une des revendications 1 à 7, dans lequel la deuxième ouverture (54) a un bord d'attaque (60B) et un bord de fuite (62B), et dans lequel le bord de fuite de la deuxième ouverture dépasse la lame de scie (20) plus loin que le bord d'attaque de la deuxième ouverture.

9. Coupe-branches selon la revendication 7 ou la revendication 8, dans lequel le bord de fuite (62A) de la première ouverture (52) et/ou le bord de fuite (62B) de la deuxième ouverture (54) porte des dents ou autres formations adaptées pour maintenir une branche en prise avec la lame de scie en rotation en cours d'utilisation.

10. Coupe-branches selon l'une des revendications 1 à 9, dans lequel le pignon est relié au moteur par une courroie d'entraînement flexible (36).

11. Coupe-branches selon l'une des revendications 1 à 10 dans laquelle le boîtier (24) couvre des parties d'un côté de la lame de scie (20), l'autre côté de la lame de scie étant largement exposée.

12. Coupe-branches selon la revendication 10 ayant un palier pour la lame de scie (20), la lame de scie étant amovible et remplaçable, le coupe-branches ayant une fixation amovible (26) pour fixer la lame de scie (20) au palier, la fixation étant montée depuis le côté largement exposé de la lame de scie.

13. Coupe-branches selon la revendication 11 dans lequel la fixation (26) est située dans un bossage (30) qui entoure la fixation montée.

14. Coupe-branches selon la revendication 13 dans lequel le bossage a au moins un contrefort (32).
